# EUROPÄISCHE PATENTANMELDUNG

(11) **EP 0 618 388 A1**
(43) Veröffentlichungstag der Anmeldung: **05.10.1994**
(21) Anmeldenummer: 94104923.1
(22) Anmeldetag: 29.03.1994
(51) Int. Cl.: F16J 15/32

(54) **Dreiteilige ruhende Abdichtung**

(30) Priorität: 31.03.1993 DE 4310448
(71) Anmelder: Richter, Bernhard, D-71723 Grossbottwar (DE)
(72) Erfinder: Richter, Bernhard, D-71723 Grossbottwar (DE)
(74) Vertreter: Wolff, Michael, Dipl.-Phys.

(57) **Zusammenfassung**

Gegenstand der Erfindung ist eine dreiteilige ruhende Abdichtung.

Stand der Technik ist eine ruhende Abdichtung mit einem radial vorgespannten elastomeren O- oder Viereck-Ring, der an einer axialen Stirnfläche eines ringförmigen Einbauraumes anliegt.

Nachteil dieser einteiligen Ruhenden Abdichtung mit einem einzelnen O-Ring ist, vom Sonderfall der Vakuum-Abdichtung abgesehen, der Raumfüllungsgrad von weniger als Eins, der eine zu hohe Leckrate der Gaswanderung und Ringvolumenänderung (Quellung) bei Toleranzen und Oberflächenrauheiten verursacht, die kleiner als erwünscht gewählt werden müssen; sowie die Gefahr der explosiven Dekompression des Ringwerkstoffes.

Aufgabe der Erfindung ist die Verallgemeinerung und Verbesserung der Vakuumabdichtung zur montagefreundlichen Abdichtung für endliche Druckdifferenzen mittels eines hohen Raumfüllungsgrades.

Lösung dieser Aufgabe ist die Kombination des Dichtringes (12; 12') mit einem dessen axiale Vorspannung erhöhenden Spannelement (16; 16') in dem axial erweiterten Einbauraum (8; 8') und mit einem dazwischen angeordneten starren, axial beweglichen Druckring (14; 14').

Vorteil dieser Aufgabenlösung ist die Reduktion von Leckrate und Volumenänderung sowie die Vergrößerung der Toleranzen und Rauheiten, ferner die Vermeidung explosiver Dekompressionen.

## Beschreibung

Die Erfindung betrifft eine ruhende Abdichtung gemäß Oberbegriff des Anspruches 1. Derartige Abdichtungen mit einem einzelnen O-Dichtring sind bekannt, auch als Vakuum-Abdichtung ; z.B. von Einsteckverbindungen für Klimaanlagen. Beim Einbau eines O-Ringes mit kreisförmiger Querschnittsfläche in eine im allgemeinen rechteckig profilierte Ringnut als Einbauraum werden die Verhältnisse von Tiefe und Breite der Nut zum Durchmesser der Querschnittsfläche des O-Ringes so gewählt, daß dieser eine Vorspannung in Richtung der Flächennormalen des Nutgrundes erhält, dem eine die Querschnittsfläche des O-Ringes verformende abzudichtende Fläche gegenüber liegt; bzw. daß sich der O-Ring unter der Vorspannung zwischen den beiden parallelen Stirnflächen der Nut achsparallel ausdehnen kann, ohne die zweite Stirnfläche zu berühren - die Anlage des O-Ringes an einer Stirnfläche ergibt sich spätestens bei Druckbeaufschlagung des Nutraumes durch den abzudichtenden Kreisringspalt.

Die Regel ist ein Nutfüllungsgrad von erheblich weniger als Eins. Die Ausnahme ist eine nahezu vollständige Füllung des Nutraumes mittels eines elastisch verformten O-Ringes. der zur Verbesserung der statischen Dichtheit zwei verhältnismäßig große Kontaktflächen am Nutgrund bzw. an der gegenüberliegenden, gegen Vakuum abzudichtenden Fläche aufweist, so daß die Diffusionsrate durch den elastomeren Werkstoff reduziert wird, welcher prinzipiell für alle Fluide, insbesondere aber für Gase, permeabel ist. Der Erfindung liegt die Aufgabe zugrunde, den Sonderfall der Vakuumabdichtung zu verallgemeinern und diese zu verbessern, indem eine ruhende Abdichtung auch für endliche Druckdifferenzen mittels eines hohen Nutfüllungsgrades geschaffen wird, und zwar auf montagefreundliche Weise.

Diese Aufgabe ist durch die ruhende Abdichtung gemäß Anspruch 1, insbesondere durch dessen kennzeichnende Merkmale, gelöst.

Es sind zwar schon Zweierkombinationen eines O-Ringes mit einem Stützring zwischen Dichtring und von diesem getrennter Stirnfläche des Einbauraumes bzw. mit einem Gleitring zwischen Dichtring und von diesem getrennter, relativ bewegter abzudichtender Fläche bekannt gewesen; hierbei fehlt aber als drittes Kombinationsteil ein Spannelement in dem im wesentlichen dafür erweiterten Einbauraum. Außerdem haben der Stütz- bzw. Gleitring je einen anderen Verwendungszweck und je eine andere Anordnung im Einbauraum als der erfindungsgemäße Druckring.

Ein bei der erfindungsgemäßen ruhenden Abdichtung vorhandener höherer Nutfüllungsgrad hat zur Folge, daß die Leckrate der Gaswanderung (durch die vom Dichtring nicht völlig ausgeglichene Rauhigkeit der abzudichtenden Fläche) sowie die Volumenänderung (insbesondere Quellung unter dem Einfluß des abzudichtenden Mediums) reduziert sind und größere Toleranzen bei der Dichtring- bzw. Einbauraumfertigung sowie eine größere Rauheit der an der Abdichtung beteiligten Oberflächen zulässig sind. Darüberhinaus bewirkt die stärkere Druckbeaufschlagung des Dichtringes der erfindungsgemäßen ruhenden Abdichtung ein die Leckrate senkendes und die Gefahr einer explosiven Dekompression vermeidendes Durch- bzw. Eindringen des abzudichtenden Gases in den Dichtringwerkstoff, dessen Diffusionsrate bei aggressiven Medien geringer ist unter dem vom erfindungsgemäßen Spannelement über den erfindungsgemäßen Druckring auf den Dichtring ausgeübten Druck, der so hoch ist, daß ein O-Ring den ihm zugeordneten Teil des erweiterten Einbauraumes nahe zu vollständig ausfüllt, wozu ein Viereck-Ring als Dichtring besonders gut geeignet wäre, welcher allerdings nur in Einzelfällen zur Verfügung steht.

Die Erfindung erlaubt es, Sonderfälle ruhender Abdichtungen durch Kombination herkömmlicher Maschinenelemente zu erfassen; sie verwirklicht die Nachgiebigkeit einer Wandung des Einbauraumes, die dadurch zur druckbeaufschlagten beweglichen Wand wird.

Vorzugsweise ist das Profil des axial beaufschlagten Druckringes mindestens L-förmig, zum Beispiel Doppel-L-förmig, und ist als Spannelement ein vorgespannter, größerer O-Ring hoher Elastizität vorgesehen. Wahlweise kann das Profil des Druckringes rechteckig sein und als Spannelement eine Teller- oder Schraubenfeder vorgesehen sein.

Denkbar ist auch, daß als Spannelement wenigstens ein, insbesondere pneumatisches, Zylinder-Kolben-Aggregat vorgesehen ist, das den Druckring axial beaufschlagt. In diesem Fall könnte der Beaufschlagungsdruck proportional zum abzudichtenden Druck steuerbar sein, wenn dieser schwankt.

Im folgenden ist die Erfindung anhand zweier durch die Zeichnung beispielhaft dargestellter Ausführungsformen der erfindungsgemäßen ruhenden Abdichtung im einzelnen erläutert.

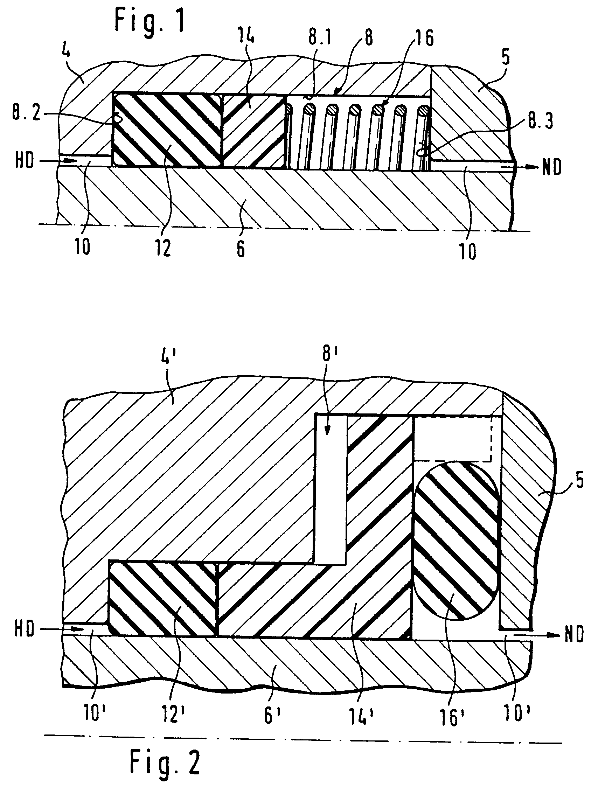

Es zeigen die Figuren 1 und 2 je einen Schnitt durch eine erste bzw. zweite Ausführungsform.

Nach Figur 1 sind im ersten Ausführungsbeispiel der erfindungsgemäßen ruhenden Abdichtung eines Kreisringspaltes 10 zwischen zwei relativ zueinander unbewegten koaxialen Maschinenteilen 4 und 5 bzw. 6 in einer rechteckig profilierten Ringnut 8 als Einbauraum zwischen der Hochdruckseite HD und der Niederdruckseite ND ein axial und radial verpreßter, ursprünglich O-förmig profilierter Dichtring 12 (aus Gummi), ein rechteckig profilierter Druckring 14
und eine Schraubenfeder 16, die als Spannelement auf dem radial inneren Maschinenteil 6 sitzt, in der angegebenen Reihenfolge angeordnet. Dabei liegt der Dichtring 12 sowohl am kreiszylindrischen Grund 8.1 der Ringnut 8 als auch an deren einer ebenen Stirnfläche 8.2 dank seiner Verpressung so an, daß eine möglichst große radiale bzw. axiale (statische) Dichtfläche vorhanden ist, die sich auch radial innen als Berührungsfläche des Maschinenteiles 6 einstellt.

Die Schraubenfeder 16 stützt sich einenends an der anderen axialen Stirnfläche 8.3 der Ringnut 8 und andernends am Druckring 14 ab, wobei sie radial nach außen vom Nutgrund 8.1 eingefaßt ist. Diese Stirnfläche 8.3 ist durch ein mit dem Teil 4 fest verbundenes Maschinenteil 5 gebildet, das den axial erweiterten. Einbauraum einseitig begrenzt.

Der zwischen der Schraubenfeder 16 und dem Dichtring 12 angeordnete Druckring 14 sitzt in der Ringnut 8 lose auf dem radial inneren Maschinenteil 6, aber so, daß er nicht verkanten kann, sondern die Federkraft ungeschmälert auf den Dichtring 12 überträgt.

Nach Figur 2 sind im zweiten Ausführungsbeispiel der erfindungsgemäßen ruhenden Abdichtung eines Kreisringspaltes 10' in einer L-förmig profilierten Ringnut 8' zweier (in der Zeichnung oberen) Maschinenteile 4' bzw. 5', das (4') gegen ein (unteres) Maschinerteil 6' abzudichten ist, ein vor dem schwachen Verpressen vorzugsweise viereckig profilierter Dichtring 12', ein L-förmig (oder grkröpft; siehe gestrichelten Ansatz) profilierter Druckring 14' und ein verpreßter O-Ring 16' (aus Gummi) in gleicher Weise wie beim ersten Ausführungsbeispiel zwischen der Hochdruckseite HD und der Niederdruckseite ND angeordnet, wobei der größere O-Ring 16' als Spannelement den Dichtring 12' über den Druckring 14' vorspannt.

Es könnte im ersten Ausführungsbeispiel die Schraubenfeder 16 und im zweiten Ausführungsbeispiel der O-Ring 16', die beide als Spannelemente wirken, durch ein zum Beispiel pneumatisches Zylinder-Kolben-Aggregat ersetzt werden, das den Druckring 14 bzw. 14' axial beaufschlagt, wobei der Beaufschlagungsdruck proportional zum abzudichtenden Hochdruck HD steuerbar sein kann.

## Patentansprüche

1. Ruhende Abdichtung mit einem einen Kreisringspalt (10 bzw. 10') insbesondere gegen Gase abdichtenden O- oder Viereck-Ring (12 bzw. 12') aus einem elastomeren Werkstoff, der radial vorgespannt ist gegen den Grund (8.1) eines ringförmigen Einbauraumes (Ringnut 8; 8') unveränderlicher Größe und Form/ uneinstellbarer axialer Länge, an dessen einer axialer Stirnfläche (8.2) der Dichtung (12; 12') anliegt, **gekennzeichnet**
durch die Kombination des Dichtringes (12; 12') mit einem eine erhöhte Vorspannung erzeugenden Spannelement (Schraubenfeder 16; O-Ring 16') an der gegenüberliegenden Stirnfläche (8.3) des zumindest axial erweiterten Einbauraumes (Ringnut 8, 8') und mit einem axial kraftschlüssig zwischen dem Dichtring (12; 12') und dem Spannelement (16; 16') angeordneten, relativ starren, beweglichen Druckring (14; 14').

2. Abdichtung nach Anspruch 1, dadurch gekennzeichnet, daß das Profil des axial beaufschlagten Druckringes (14') mindestens L-förmig ist und als Spannelement ein vorgespannter, größerer O-Ring (16') hoher Elastizität vorgesehen ist.

3. Abdichtung nach Anspruch 1, dadurch gekennzeichnet, daß das Profil des axial beaufschlagten Druckringes (14) rechteckig ist und als Spannelement eine ggf. schraubenförmige Feder (16) vorgesehen ist.

4. Abdichtung nach Anspruch 1, dadurch gekennzeichnet, daß als Spannelement wenigstens ein, insbesondere pneumatisches, Zylinder-Kolben-Aggregat vorgesehen ist, das den Druckring axial beaufschlagt.

5. Abdichtung nach Anspruch 4, dadurch gekennzeichnet, daß der Beaufschlagungsdruck proportional zum abzudichtenden Druck steuerbar ist.

6. Abdichtung mit einem offenbarten neuen Merkmal oder mit einer neuen Kombination offenbarter Merkmale.
